# EUROPÄISCHE PATENTANMELDUNG

(11) **EP 3 690 391 A1**
(43) Veröffentlichungstag der Anmeldung: **05.08.2020**
(21) Anmeldenummer: 19158404.4
(22) Anmeldetag: 20.02.2019
(51) Int. Cl.: G01B 11/24, G01B 11/06, G06T 7/571, G02B 21/36, H04N 5/235, H05K 13/08

(54) **VORRICHTUNG ZUR ERFASSUNG EINER DREIDIMENSIONALEN STRUKTUR**

(30) Priorität: 29.01.2019 DE 102019102231
(71) Anmelder: Senswork GmbH, 84489 Burghausen (DE)
(72) Erfinder: Obergrußberger, Rainer, 84568 Pleiskirchen (DE); Rieger, Roman, 83317 Teisendorf (DE); Mayer, Sebastian, 84489 Burghausen (DE); Zwirglmaier, Michael, 84576 Teising (DE); Müller, Daniel, 84543 Winhöring (DE); Höcketstaller, Robert, 84489 Burghausen (DE); Donaubauer, Matthias, 80809 München (DE)
(74) Vertreter: Lichtnecker, Markus Christoph

(57) **Zusammenfassung**

Die Erfindung betrifft eine Vorrichtung zur Erfassung einer dreidimensionalen Struktur, umfassend ein in z-Richtung verstellbares, bildgebendes Gerät (10), eine Steuerungsvorrichtung (12), die dazu ausgebildet ist, ein Bild einer ersten Ebene aufzunehmen und nach Verstellung des bildgebenden Geräts (10) in z-Richtung ein Bild einer zweiten Ebene aufzunehmen, und eine Auswertevorrichtung (16), die dazu ausgebildet ist, eine Subebene zwischen der ersten Ebene und der zweiten Ebene zu interpolieren.

## Beschreibung

Die Erfindung betrifft eine Vorrichtung zur Erfassung einer dreidimensionalen Struktur, umfassend ein in z-Richtung verstellbares, bildgebendes Gerät, insbesondere Kamera, eine Steuerungsvorrichtung, die dazu ausgebildet ist, ein Bild einer ersten Ebene aufzunehmen und nach Verstellung des bildgebenden Geräts in z-Richtung ein Bild einer zweiten Ebene aufzunehmen.

Derartige Vorrichtungen sind grundsätzlich bekannt. Dabei werden verschiedene Ebenen aufgenommen, um ein dreidimensionales Gesamtbild zu erhalten.

Eingesetzt werden diese Vorrichtungen z.B. bei automatisierten, optischen Prüfverfahren zur Qualitätssicherung.

Die Anforderungen der Industrie an optische Prüfverfahren in der Qualitätssicherung hinsichtlich Genauigkeit, Schnelligkeit und/oder Sicherheit steigen stetig an. Ebenso wird die optische Verarbeitung von immer komplexer aufgebauten Fertigungsteilen stets anspruchsvoller.

Bei Herstellern von Elektronik- und/oder Stecker-Komponenten, beispielsweise für die Elektroindustrie, die Automobilindustrie und/oder in der Medizintechnik, müssen dabei insbesondere auch kleinste zeichnungsrelevante Maße, wie z.B. Koplanaritäten, 3D-Gehäuseformen und/oder die Höhenlage von Stecker-Pins überprüft werden.

Ein häufig zu überprüfendes Qualitätsmerkmal ist bei solchen Objekten die Höhe der Anschlusspins. Zu kurze, abgebrochene und/oder verbogene Pins würden keinen sauberen Anschluss an Gegenstücke und somit keinen elektrischen Kontakt mehr herstellen können. Ebenso ist bei mehreren Anschlusspins eines Steckers meistens die Koplanarität dieser zu gewährleisten. Koplanarität bedeutet hierbei, dass alle Pin-Spitzen auf einer Höhenebene liegen.

Aufgrund der enormen Losgrößen von teilweise mehreren Millionen Modulen sind die Taktzeiten der Produktion entsprechend kurz, insbesondere kleiner als zwei Sekunden.

Die Prüftechnik soll hierbei den Produktionszyklus nicht verlangsamen, weshalb in den Produktionslinien schnelle, robuste und/oder inlinefähige Kameras zur dreidimensionalen Überprüfung der Bauteile benötigt werden. Eine inlinefähige Kamera zeichnet sich insbesondere durch eine kurze Scan-Zeit aus, welche kleiner oder gleich wie ein typischer, automatisierter Produktionszyklus ist.

Auf dem Markt ist unter dem Namen ZFokus ® beispielsweise eine Vorrichtung zur Erfassung einer dreidimensionalen Struktur bekannt, welche ein so genanntes Depth from Focus (DfF) Verfahren nutzt.

Jedoch kann mit dem bisherigen ZFokus lediglich eine Scan-Rate von drei Sekunden realisiert werden, wodurch einige Anforderungen der Industrie nicht realisiert werden können.

Es ist daher eine Aufgabe der Erfindung, eine Vorrichtung sowie ein Verfahren zur Erfassung einer dreidimensionalen Struktur zu schaffen, mit der/dem hohe Scan-Raten erreicht werden.

Die Lösung dieser Aufgabe erfolgt durch die Vorrichtung sowie das Verfahren der unabhängigen Ansprüche.

Erfindungsgemäß wird eine dreidimensionale Struktur erfasst, beispielsweise ein dreidimensionales Objekt. Bei dem Objekt kann es sich z.B. um ein Massenprodukt wie Elektronik- und/oder Stecker-Komponenten handeln. Diese werden meist in großen Stückzahlen produziert und müssen zur Qualitätssicherung in kurzer Zeit geprüft werden.

Dazu wird die dreidimensionale Struktur erfasst. Dies erfolgt vorzugsweise automatisiert. Abweichungen können dabei festgestellt werden. Ein Objekt, welches die vorgegebenen Kriterien nicht erfüllt, kann dann beispielsweise aussortiert werden. Auch kann eine Warnung ausgegeben werden, falls eine zu große Anzahl an Objekten Abweichungen aufweist.

Die Vorrichtung umfasst ein in z-Richtung verstellbares, bildgebendes Gerät, insbesondere Kamera. Bei der Kamera handelt es sich vorzugsweise um eine 2D-Kamera, welche insbesondere hochauflösend ist. Die Vorrichtung schafft durch die 2D-Kamera in Verbindung mit der Achse und zugehöriger Software ein 3D-Bild. Das bildgebende Gerät ist insbesondere für die Inline-Anwendung zur verschleißfreien, dreidimensionalen Qualitätskontrolle von Klein- und/oder Kleinstbauteilen ausgebildet.

Das bildgebende Gerät kann insbesondere ein Blickfeld von mindestens 5 mm x 5 mm aufweisen, vorzugsweise von mindestens 10 mm x 10 mm, beispielsweise von 12 mm x 12 mm, 30 mm x 24 mm oder 30 mm x 34 mm.

Die Genauigkeit kann lateral insbesondere bei 5 µm liegen.

Insbesondere kann die Kamera ein Blickfeld von 2048 x 2048 Bildpunkten monochrom aufweisen.

Beispielsweise kann die Kamera eine Auflösung von mindestens 1, 5, 10, 15, 20, 25 oder mehr Megapixeln aufweisen.

Die Framerate kann insbesondere bei mindestens 50 fps, z.B. bei 72 fps, 80 fps, 86 fps oder 92 fps, liegen. Bei kleineren Auflösungen sind auch höhere Frameraten denkbar.

Vorzugsweise arbeitet die Vorrichtung nach dem DfF-Verfahren. DfF beschreibt ein Verfahren, bei dem anhand eines Bildstapels von wenigstens zwei Bildern, vorzugsweise von mindestens 3, 4, 5, 6, 7, 8, 9, 10, 20, 30, 40, 50, 60, 70, 80, 90, 100, 150, 200, 250, 300, 400, 500 oder mehr Bildern, mit unterschiedlichen Abbildungsverhältnissen der Abstand eines Objektpunktes zur Kamera anhand eines Fokuslevels berechnet wird.

Da der DfF Algorithmus nur diskrete Indizes als Höhenwerte liefert, ist er in seiner Genauigkeit in z-Richtung beschränkt. Um eine echte Höhenbewertung vorzunehmen, muss somit eine Korrelation aus z-Index und Bildabständen erfolgen. Beispielsweise kann ein Messtaster, ein Längenmaßstab und/oder eine elektronische Wegmessvorrichtung für die Positionsbestimmung vorgesehen sein.

Das bildgebende Gerät kann in z-Richtung insbesondere mittels einer Antriebsvorrichtung verstellt werden. Um das bildgebende Gerät zur Startposition zu bewegen bzw. zu justieren, kann beispielsweise dieselbe Antriebsvorrichtung wie für die eigentliche Messbewegung, also das Abtasten, vorgesehen sein. Alternativ können hierfür auch unterschiedliche Antriebsvorrichtungen vorgesehen sein. Beispielsweise kann die Messbewegung auch mittels eines Exzenters bereitgestellt werden.

Das Abtasten kann insbesondere in Schritten von 1000 µm oder 100 µm, vorzugsweise von z.B. 50 µm, 10 µm oder 5 µm, erfolgen. Das bildgebende Gerät kann z.B. mit einer maximalen Geschwindigkeit von 100 mm pro Sekunde verstellt werden.

Insbesondere wird ein maximaler Scanbereich von mindestens 3 cm, 4 cm, 5 cm, 6 cm oder mehr, vorzugsweise von 6,5 cm, in z-Richtung ermöglicht. Die Genauigkeit in z-Richtung kann z.B. bei 10 µm liegen. Der Z-Datentyp kann insbesondere 16 Bit betragen.

Es ist eine Steuerungsvorrichtung, insbesondere mit einem Trigger, vorgesehen, die dazu ausgebildet ist, ein Bild einer ersten Ebene aufzunehmen und nach Verstellung des bildgebenden Geräts in z-Richtung ein Bild einer zweiten Ebene aufzunehmen. Die Verstellung des bildgebenden Geräts kann z.B. mittels derselben Steuerungsvorrichtung erfolgen. Alternativ kann hierfür auch eine separate Steuereinheit vorgesehen sein. Diese Steuereinheit kann vorzugsweise mit der Steuerungsvorrichtung gekoppelt sein.

Es ist eine Auswertevorrichtung vorgesehen, die dazu ausgebildet ist, wenigstens eine bzw. genau eine Subebene zwischen der ersten Ebene und der zweiten Ebene zu interpolieren.

Die Auswertevorrichtung kann insbesondere einen Hardwarebeschleuniger und/oder eine Multiprozessor-Architektur, z.B. GPU oder FPGA, umfassen oder daraus bestehen.

Vorzugsweise ist eine Vielzahl an Ebenen vorgesehen, z.B. mindestens 3, 4, 5, 6, 7, 8, 9, 10, 20, 30, 40, 50, 60, 70, 80, 90, 100, 150, 200, 250, 300, 400, 500 oder mehr. Insbesondere kann zwischen jeder Ebene eine Subebene interpoliert werden. Die Ebenen und/oder Subebenen sind vorzugsweise parallel zueinander orientiert. Insbesondere sind die Ebenen und/oder Subebenen in z-Richtung parallel orientiert und/oder mittig ausgerichtet.

Es wurde überraschend festgestellt, dass die Form des Fokuswertverlaufs zumindest annähernd parabolisch ist. Daher ist es möglich, auch Werte zwischen zwei, insbesondere benachbarten, Ebenen, also zwischen den diskreten Abtastpunkten, zu interpolieren. Dadurch kann eine erhöhte Genauigkeit erreicht werden.

Als Nebeneffekt davon ist es möglich, mit weniger Bildern zu arbeiten, wobei die Genauigkeit erhalten bleibt. Insofern stellt die Einführung von Subebenen nicht nur einen Genauigkeitsgewinn, sondern vor allem auch einen Geschwindigkeitsgewinn dar.

Vorzugsweise ist die Auswertevorrichtung dazu ausgebildet, bereits während der Aufnahme der Bilder die bereits aufgenommen Bilder auszuwerten und die entsprechenden Subebenen zu interpolieren.

Anstelle einer herkömmlichen sequentiellen Auswertung kann somit eine asynchrone Auswertung parallel zur Bildaufnahmesequenz stattfinden. Die Auswertung wird dadurch insgesamt beschleunigt und die Scan-Rate erhöht. So kann die Taktrate beispielsweise im Bereich von zwei Sekunden liegen.

Die Stärken des Systems liegen insbesondere in der sehr performanten parallelen Verarbeitung der hohen Bilddatenmenge je Scan, beispielsweise mehrere Gigabyte pro Scan, sowie der intelligenten Berechnung der z-Informationen. Dabei können auch die Reflexionsverhältnisse auf dem Bauteil berücksichtigt werden.

Einzelne Komponenten der Vorrichtung, insbesondere im Bereich der Bildaufnahme, können z.B. schwarz eloxiert sein, um ungewünschte Reflektionen zu vermeiden.

Insbesondere unter Zuhilfenahme von schnellen und robusten Interpolationsalgorithmen erfolgt die Berechnung der Höheninformation in hoher Qualität und Präzision. Neben dem 3D-Tiefenbild kann die Vorrichtung vorzugweise auch ein überlagertes Scharfbild als 2D-Bild liefern, welches für zusätzliche 2D-Auswertungen, wie z.B. für laterale Messfunktionen, herangezogen werden kann.

Vorzugsweise wird eine Inlineprüfung bei einem Blickfeld von etwa 30 mm x 24 mm oder mehr für dreidimensionale Strukturen ermöglicht. So kann mit einer einzigen Aufnahme das gesamte Objekt abgebildet werden. Das Objekt muss daher für eine vollständige Erfassung insbesondere nicht verfahren werden.

Weiterbildungen der Erfindung sind auch den abhängigen Ansprüchen, der Beschreibung sowie den beigefügten Zeichnungen zu entnehmen.

Gemäß einer Ausführungsform erfolgt die Interpolation der Subebene pixelweise. Dadurch, dass die Berechnung der Subebene pixelweise erfolgt, wirkt die Oberfläche insgesamt glatter.

Nach einer weiteren Ausführungsform erfolgt die Interpolation mittels eines Parabelfits. Der Parabelfit hat den Vorteil, dass beliebig viele Stützpunkte zur Berechnung einer Trendlinie verwendet werden können. Dies führt dazu, dass auch bei einzelnen Ausreißern keine bzw. nur geringe Genauigkeitseinbußen auftreten.

Für einen Parabelfit kann eine Detektion der Position des schärfsten Pixels in einem Stapel erfolgen. Dann kann an der darüber und der darunter liegenden Ebene jeweils das schärfste Pixel bestimmt werden. Nun kann ein Parabelfit durch die drei Punkte erfolgen. Insbesondere kann dann eine Verschiebung der Ebenen bzw. eine Verschiebung entlang der Ebenen erfolgen, um das Extremum der drei Punkte zu ermitteln.

Ein Parabelfit ist deutlich weniger aufwändig als z.B. die Berechnung einer komplexen Matrizenfunktion.

Gemäß einer weiteren Ausführungsform erfolgt die Interpolation mittels einer quadratischen Interpolation. Bei einer quadratischen Interpolation wird vorzugsweise lediglich eine Subebene im Bereich +/- 1 Ebene ausgehend von der Hauptebene, welche einem z-Index entspricht, eingefügt.

Nach einer weiteren Ausführungsform ist ein Filter, insbesondere ein Median Filter und/oder bilateraler Filter, vorzugsweise ein 16-bit Median Filter, vorgesehen.

Ein Median-Filter und/oder bilateraler Filter weist eine glättende und gleichzeitig kantenerhaltende Funktion auf. Bei einer Medianfilterung bzw. bilateralen Filterung werden alle sich im Filterfenster befindlichen Grauwerte gesammelt und anschließend sortiert. Das mittlere Element bestimmt dann den Median und wird dem Ausgangspixel zugewiesen.

Da die berechneten Höhenwerte nach der Berechnung der Subebenen 16-bit Werte aufweisen und das resultierende Höhenbild aber nach wie vor Rauschen und Störungen aufweisen kann, kann ein effizienter 16-bit Filter eingesetzt werden.

Vorzugsweise wird ein performanter 16-bit Median Filter mit beliebiger Filtergröße eingesetzt. Dieser ist insbesondere weder auf die Filtergröße noch in der Bittiefe beschränkt.

Aufgrund der unterschiedlichen Belichtungszeiten und/oder aufgrund der hohen Anzahl an maximalen Aufnahmen pro Scan wird vorzugsweise mit 16-Bit Bilddaten, insbesondere für die Helligkeitsinformation einer Ebene und/oder für die z-Information, gearbeitet.

Gemäß einer weiteren Ausführungsform ist eine Belichtungsvorrichtung vorgesehen, die mittels der Steuerungsvorrichtung derart gesteuert ist, dass die Belichtungszeiten der ersten Ebene und der zweiten Ebene unterschiedlich sind. Bei mehr als zwei Ebenen sind insbesondere die Belichtungszeiten mit geraden Indizes und ungeraden Indizes unterschiedlich.

Die Belichtungsvorrichtung kann z.B. blaues, rotes, weißes Licht und/oder Infrarotlicht aussenden. Insbesondere kann die Belichtungsvorrichtung LEDs aufweisen.

Ein Depth from Focus Algorithmus liefert in überstrahlten und/oder schwarzen Bereichen keine Höheninformation, da dafür die nötige Textur fehlt. Dies liegt in den meisten Fällen an der Materialeigenschaft des Prüfteils. Um dem entgegenzuwirken, werden während der Bildaufzeichnung verschiedene Belichtungszeiten verwendet.

Dadurch können alle Bereiche zumindest einmal in guter Qualität abgebildet werden und es entsteht insgesamt ein vollständigeres Tiefenbild bei Prüfteilen, die eine hohe Helligkeitsvarianz aufgrund von reflektierenden Oberflächeneigenschaften besitzen.

Insbesondere wird jedes zweite Bild im Bildstapel mit unterschiedlicher Belichtungszeit aufgenommen. So kann vorzugsweise immer abwechselnd ein Bild mit einer längeren Belichtungszeit und ein Bild mit einer kürzeren Belichtungszeit aufgenommen werden.

Beispielsweise können alle geradzahligen Ebenen mit der gleicher Belichtungszeit beleuchtet werden. Auch alle ungeradzahligen Ebenen können mit der gleichen Belichtungszeit beleuchtet werden, wobei sich die Belichtungszeit der ungeradzahligen Ebenen von der Belichtungszeit der geradzahligen Ebenen unterscheidet.

Insbesondere in Kombination mit einem Parabelfit können zwei Aufnahmen mit unterschiedlichen Belichtungszeiten bei gleichbleibender Auflösung in z-Richtung simuliert werden. Die Verarbeitungszeit ist hierbei deutlich geringer, da das bildgebende Gerät nur einmal bewegt werden muss.

Vorzugsweise wird somit nicht jede Ebene für sich mit zwei unterschiedlichen Belichtungszeiten beleuchtet, wie es beispielsweise bei herkömmlichen High Dynamic Range Imaging (HDRI) Verfahren der Fall ist. Dies ist jedoch alternativ ebenfalls möglich.

Insbesondere kann die Intensität der Beleuchtung variiert werden. Alternativ kann die Belichtungszeit des bildgebenden Geräts dynamisch während eines Scanvorgangs verändert werden. Die unterschiedlichen Helligkeitsinformationen können dann insbesondere durch eine geeignete Transformations-Funktion, z.B. Kamera-Responsefunktion, in einen einheitlichen Werteraum zur Fokusberechnung übertragen werden. Dadurch kann in einer ersten Annäherung über den kompletten Bildstapel z.B. eine 16 Bit HDR-Information erhalten werden.

Beim HDRI Verfahren sowie beim Verfahren, bei dem je zwei Ebenen unterschiedlich belichtet werden, können hochdynamische Bildinhalte wie z.B. dunkler Kunststoffspritzgussgehäuse in Verbindung mit stark glänzenden Stecker-Pins erfasst werden. Dabei werden die relevanten Oberflächen vorzugsweise ohne Taktzeitbelastung durch Doppelbelichtung oder durch vorschubsynchrone alternierende Helligkeitsregelung in einem Scan erfasst.

Auch Prüfaufgaben mit großen Helligkeitsvarianzen in den Bauteilen, die bisher nicht gelöst werden konnten, oder auch Bauteile mit großem Dynamikumfang können dadurch zuverlässig geprüft werden. Ferner können nicht nur Koplanaritäts- und/oder Pinhöhenprüfungen durchgeführt werden, sondern z.B. auch Lötstelleninspektionen, Geometrie- und/oder Fehlstellenprüfungen.

Die optische Inspektion von Lötstellen kann notwendig sein, um die Qualität der elektrischen Kontaktierung sicher zu stellen. Nur teilweise oder schlecht angelötete elektrische Komponenten können zu Fehlern in der späteren Anwendung des Produkts durch fehlende Signalübertragung führen. Neben der vollständigen Verlötung sind für die elektrische Übertragung auch die Form und das Volumen des angebrachten Lötzinns ein wichtiger Parameter für die Qualität der Lötstelle.

Die Lötstellen können erfindungsgemäß dreidimensional abgebildet werden. Anschließend können insbesondere sämtliche Qualitätsparameter mit nur einem Scan bewertet werden.

Bei der Produktion vieler verschiedener Klein- und/oder Kleinstbauteile in der Industrie kann die Überprüfung der Bauteilgeometrie und/oder die Inspektion auf Fehlstellen einen notwendigen Schritt innerhalb der Produktionskette darstellen.

Das Einhalten bestimmter Grenzwerte bei der Abweichung von der Standardgeometrie, wie z.B. unerwünschte Rückstände an Anspritzpunkten von Spritzgussteilen, sind dabei zu kontrollieren. Ebenso müssen Fehlstellen, wie z.B. abgebrochene Zähne an kleinen Zahnrädern, sicher erkannt werden. Durch die generierten dreidimensionalen Daten des Prüfobjekts können derartige Fehlstellen sicher und genau detektiert werden.

Nach einer weiteren Ausführungsform sind die Belichtungszeiten mittels einer automatischen Parametrierung optimiert. Die Parametrierung kann insbesondere bereits werkseitig erfolgen.

Da die Parametrierung in vielen Fällen recht anspruchsvoll ist und einige Parameter empirisch für jedes Prüfteil eigens ermittelt werden müssen, ist ein automatischer Parametrierassistent sinnvoll.

Die Parametrierung kann insbesondere die optimalen Belichtungswerte vollständig ermitteln. Beispielsweise werden für die Ermittlung der Belichtungszeit so lange Bilder aufgezeichnet, bis keine bzw. nur wenige übersteuerte Grauwerte, z.B. 0 bzw. 255 bei 8-bit Bildern, auftreten.

Über eine Autotune-Funktion können beispielsweise verschiedene Belichtungszeiten durchgefahren werden. Hierbei handelt es sich insbesondere um ein iteratives Verfahren. Dabei können die Confidence-Werte über die Fläche ermittelt werden. Es kann dann die Belichtungszeit ausgewählt werden, bei der die wenigsten grauen, unverwertbaren Pixel auftreten.

Die optimalen Belichtungszeiten der ersten Ebene und der zweiten Ebene können dabei unabhängig voneinander bestimmt werden. Typische Belichtungszeiten liegen im Bereich von z.B. 0,001 s und 0,1 s. Beispielsweise kann die Belichtungszeit der ersten Ebene bei 0,015 Sekunden liegen und der zweiten Ebene bei 0,03 Sekunden.

Gemäß einer weiteren Ausführungsform nimmt die Steuerungsvorrichtung lediglich Teilbereiche der ersten Ebene und/oder der zweiten Ebene auf. Auf diese Weise werden insbesondere von vorne herein weniger Daten erfasst.

Alternativ oder zusätzlich wertet die Auswertevorrichtung lediglich Teilbereiche der ersten Ebene und/oder der zweiten Ebene aus.

Oftmals sind nur kleine Teilbereiche eines Prüfobjekts von Interesse, so genannte Multi Areas of Interest (AOI), beispielsweise die Pin-Höhen eines Steckers und/oder eine dazugehörige Referenzfläche. In den meisten Fällen nehmen diese Flächen nur einen Teil des Kamerabilds ein, allerdings verstreut über das gesamte Bild. Um die Berechnungszeit und damit die Gesamtzykluszeit der Auswertung gering zu halten, werden insbesondere nur die interessanten Teilbereiche als solche markiert und/oder die Bilder nur innerhalb dieser Teilbereiche ausgewertet.

Die AOI können insbesondere z.B. 20 Megapixel umfassen. Beispielsweise können bestimmte Zeilen in einem Chip begrenzt werden und/oder nicht alle Daten ausgegeben werden.

Die Auswahl der Bereiche kann insbesondere mittels einer automatischen Parametrierung erfolgen.

Die Parametrierung kann insbesondere die benötigten Scanbereiche vollständig ermitteln. Die Scanbereiche können über den Fokuswertverlauf innerhalb der AOI ermittelt werden. Für jeden Pixel eines Bereichs der AOI muss insbesondere ein Peak im Verlauf vorhanden sein.

Nach einer weiteren Ausführungsform nimmt die Steuerungsvorrichtung bei einer Vielzahl an Ebenen lediglich Bilder bestimmter Ebenen auf. Es werden folglich vorzugsweise nicht alle Ebenen aufgenommen.

Alternativ oder zusätzlich wertet die Auswertevorrichtung bei einer Vielzahl an Ebenen lediglich Bilder bestimmter Ebenen aus.

Bei so genannten Multi Layer Scans werden mehrere Bereiche eines Objekts in z-Richtung gescannt. Um dies performant zu gestalten, kann der jeweilige Bereich soweit eingeschränkt werden, dass nur die Merkmale gescannt werden, die von Interesse sind. Es wird somit nicht in jeder z-Position ein Bild erstellt.

Liegt beispielsweise die Referenzfläche bei einer Pin-Höhen-Inspektion auf einer anderen Ebene als die Pins selbst, so können im Prinzip zwei Scans an unterschiedlichen z-Positionen gemacht werden. Der Offset der beiden Scanebenen kann aufgrund des bekannten Abstands eingerechnet werden, wodurch ein einzelnes Höhenbild entsteht, ohne dass zwischen den Ebenen Bilder aufgezeichnet werden müssen.

Die Auswahl der Ebenen kann insbesondere mittels einer automatischen Parametrierung erfolgen.

Insbesondere kann zunächst eine zweidimensionale Aufnahme erstellt werden, um die exakte Position des Objekts zu bestimmen.

Insbesondere durch eine Kombination von Multi AOI und Multi Layer entstehen dreidimensionale Quader, innerhalb derer eine Berechnung stattfindet. Bereiche außerhalb dieser Regionen können ignoriert werden.

Die Erfindung betrifft auch ein Verfahren zur Erfassung einer dreidimensionalen Struktur mit einer erfindungsgemäßen Vorrichtung, bei dem ein Bild einer ersten Ebene aufgenommen wird, das bildgebende Gerät, insbesondere die Kamera, in z-Richtung verstellt wird und ein Bild einer zweiten Ebene aufgenommen wird.

Eine Subebene wird zwischen der ersten Ebene und der zweiten Ebene interpoliert. Durch die zwischen der ersten und der zweiten Ebene errechnete Subebene können insbesondere die Genauigkeit und/oder die Geschwindigkeit erhöht werden.

Gemäß einer Ausführungsform erfolgen das Aufnehmen der Bilder und die Auswertung parallel. Auf diese Weise kann die Geschwindigkeit der Auswertung weiter erhöht werden.

Nach einer weiteren Ausführungsform kann die Belichtungszeit bzw. können unterschiedliche Belichtungszeiten mittels einer automatischen Parametrierung optimiert werden.

Alternativ oder zusätzlich kann durch eine automatische Parametrierung eine Auswahl relevanter Teilbereich und/oder relevanter Ebenen erfolgen. Bereiche außerhalb dieser Regionen können ignoriert werden. So kann die Geschwindigkeit der Auswertung weiter erhöht werden.

Alle hier beschriebenen Ausführungsformen und Bauteile der Vorrichtung sind insbesondere dazu ausgebildet, z.B. mittels einer Steuerungsvorrichtung, nach dem hier beschriebenen Verfahren betrieben zu werden. Ferner können alle hier beschriebenen Ausführungsformen der Vorrichtung sowie alle hier beschriebenen Ausführungsformen des Verfahrens jeweils miteinander kombiniert werden, insbesondere auch losgelöst von der konkreten Ausgestaltung, in deren Zusammenhang sie erwähnt werden.

Die Erfindung wird im Folgenden beispielhaft unter Bezugnahme auf die Zeichnungen beschrieben. Es zeigen:
- Fig. 1: eine Seitenansicht einer Ausführungsform einer erfindungsgemäßen Vorrichtung,
- Fig. 2: einen Fokuswertverlauf in drei verschiedenen Pixeln,
- Fig. 3: ein Höhenbild eines Multi Layer Scans, und
- Fig. 4: ein Flussdiagramm einer asynchronen Auswertung parallel zur Bildaufnahmesequenz.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

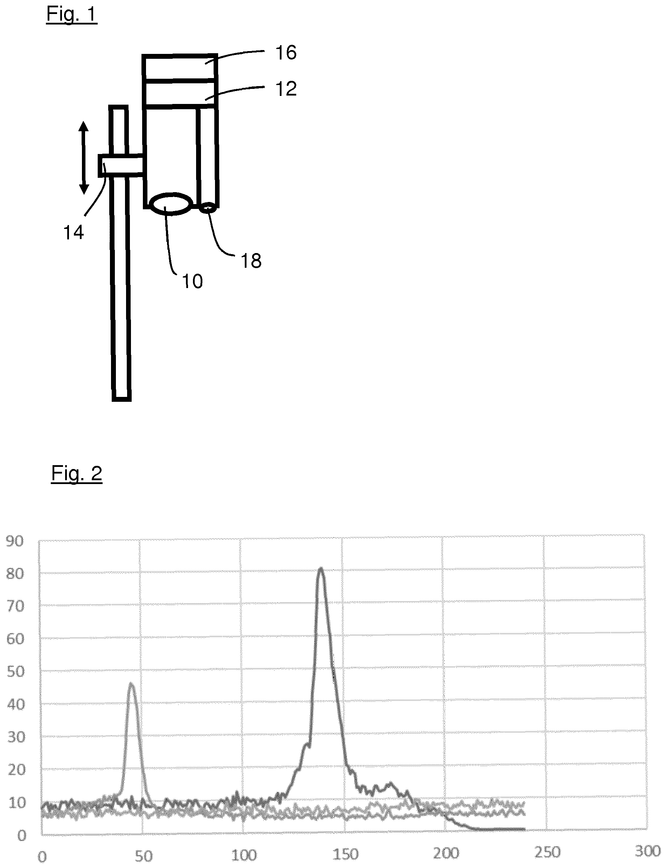

Fig. 1 zeigt eine Vorrichtung zur Erfassung einer dreidimensionalen Struktur mit einer in z-Richtung (siehe Doppelpfeil) verstellbaren Kamera 10, welche das bildgebende Gerät bildet.

Die Vorrichtung umfasst eine Steuerungsvorrichtung 12, die Bilder mittels der Kamera 10 in verschiedenen Ebenen aufnehmen kann. Die Kamera 10 kann dabei mittels einer Antriebsvorrichtung 14 in z-Richtung verstellt werden, wobei in bestimmten, vorgegebenen Abständen jeweils ein Bild aufgenommen wird.

Ferner umfasst die Vorrichtung eine Auswertevorrichtung 16, welche zwischen den aufgenommenen Ebenen jeweils eine Subebene errechnet.

Über eine Belichtungsvorrichtung 18 kann die Belichtung der Bilder in den einzelnen Ebenen erfolgen. Die Ebenen können insbesondere abwechselnd mit unterschiedlichen Belichtungszeiten belichtet werden, wobei jede Ebene vorzugsweise lediglich mit einer Belichtungszeit belichtet wird. So können in einer Ebene z.B. helle Bauteile zur Geltung kommen und in der nächsten Ebene dunkle Bauteile.

Durch eine Interpolation können schließlich in einem Gesamtbild sämtliche Bauteile gut sichtbar sein.

Fig. 2 zeigt einen Fokuswertverlauf in drei verschiedenen Pixeln, wobei in der x-Achse die z-Richtung und in der y-Achse der Fokuswert aufgetragen ist.

Die Form des Fokuswertverlaufs ist parabolisch. Ausgehend davon ist es möglich, auch Werte zwischen den diskreten Abtastpunkten zu interpolieren und eine erhöhte Genauigkeit zu erhalten.

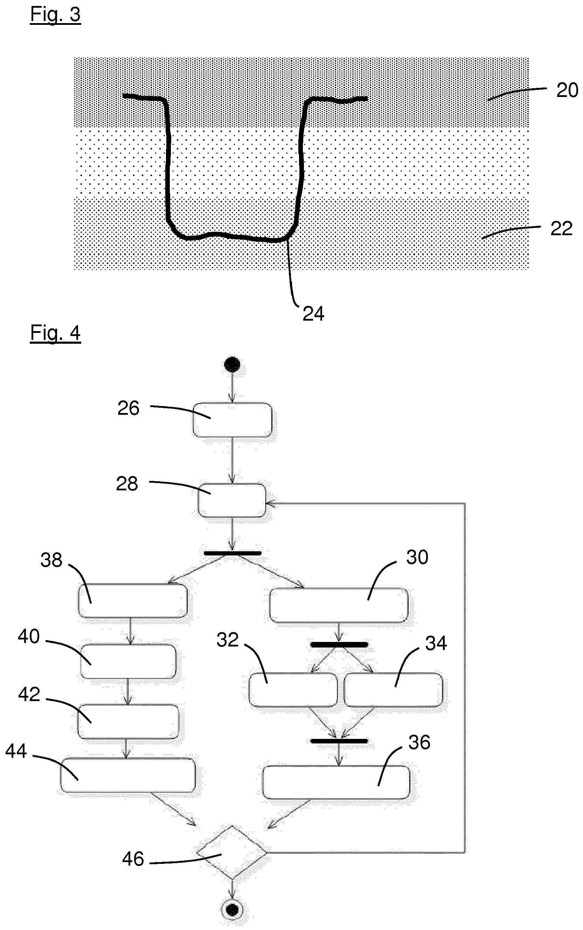

In Fig. 3 ist ein möglicher Verlauf eines Multi Layer Scans dargestellt.

Liegt beispielsweise die Referenzfläche bei einer Pin-Höhen-Inspektion auf einer anderen Ebene als die Pins selbst, so können im Prinzip zwei Scans an unterschiedlichen z-Positionen gemacht werden. Der Offset des ersten Scanbereichs 20 und des zweien Scanbereichs 22 kann aufgrund des bekannten Abstands eingerechnet werden.

Zwischen dem ersten Scanbereich 20 und dem zweien Scanbereich 22 findet insbesondere kein Scan statt. Dennoch kann ein Höhenbild 24 erstellt werden. Schließlich zeigt Fig. 4 ein Flussdiagramm einer asynchronen Auswertung parallel zur Bildaufnahmesequenz.

Zur Steigerung der Performance werden die Bilddaten bereits während des Scanvorgangs asynchron vorverarbeitet.

Zunächst erfolgt eine Initialisierung 26, dann wird der Scan gestartet 28.

Der Aufnahmevorgang wird gestartet 30. Nun wird die Achse verfahren 32. Dabei werden Bilder aufgezeichnet 34. Schließlich wird der Aufnahmevorgang beendet 36.

Parallel zum Aufnahmevorgang wird die Verarbeitung gestartet 38. Die Bilder werden verarbeitet 40 und ein Tiefenbild erstellt 42. Schließlich kann das Tiefenbild optional verbessert werden 44.

Schließlich kann - je nach Bedarf - ein neuer Scan 46 gestartet werden.

### Bezugszeichenliste

- 10: Kamera, bildgebendes Gerät
- 12: Steuerungsvorrichtung
- 14: Antriebsvorrichtung
- 16: Auswertevorrichtung
- 18: Belichtungsvorrichtung
- 20: erster Scanbereich
- 22: zweiter Scanbereich
- 24: Höhenbild
- 26: Initialisierung
- 28: Starte Scan
- 30: Starte Aufnahmevorgang
- 32: Verfahre Achse
- 34: Bildaufzeichnung
- 36: Beende Aufnahmevorgang
- 38: Starte Verarbeitung
- 40: Verarbeite Bilder
- 42: Erstelle Tiefenbild
- 44: Verbesserung Tiefenbild
- 46: Neuer Scan

## Patentansprüche

1. Vorrichtung zur Erfassung einer dreidimensionalen Struktur, umfassend ein in z-Richtung verstellbares, bildgebendes Gerät (10), insbesondere Kamera,
eine Steuerungsvorrichtung (12), die dazu ausgebildet ist, ein Bild einer ersten Ebene aufzunehmen und nach Verstellung des bildgebenden Geräts (10) in z-Richtung ein Bild einer zweiten Ebene aufzunehmen, und eine Auswertevorrichtung (16), die dazu ausgebildet ist, eine Subebene zwischen der ersten Ebene und der zweiten Ebene zu interpolieren.

2. Vorrichtung nach Anspruch 1,
**dadurch gekennzeichnet,**
**dass** die Interpolation der Subebene pixelweise erfolgt.

3. Vorrichtung nach Anspruch 1 oder 2,
**dadurch gekennzeichnet,**
**dass** die Interpolation mittels eines Parabelfits erfolgt.

4. Vorrichtung nach einem der vorhergehenden Ansprüche,
**dadurch gekennzeichnet,**
**dass** die Interpolation mittels einer quadratischen Interpolation erfolgt.

5. Vorrichtung nach einem der vorhergehenden Ansprüche,
**dadurch gekennzeichnet,**
**dass** ein Filter, insbesondere ein Median Filter und/oder bilateraler Filter, vorzugsweise ein 16-bit Median Filter, vorgesehen ist.

6. Vorrichtung nach einem der vorhergehenden Ansprüche,
**dadurch gekennzeichnet,**
**dass** eine Belichtungsvorrichtung vorgesehen ist, die mittels der Steuerungsvorrichtung derart gesteuert ist, dass die Belichtungszeiten der ersten Ebene und der zweiten Ebene unterschiedlich sind.

7. Vorrichtung nach einem der vorhergehenden Ansprüche,
**dadurch gekennzeichnet,**
**dass** die Belichtungszeiten mittels einer automatischen Parametrierung optimiert sind.

8. Vorrichtung nach einem der vorhergehenden Ansprüche,
**dadurch gekennzeichnet,**
**dass** die Steuerungsvorrichtung (12) lediglich Teilbereiche der ersten Ebene und/oder der zweiten Ebene aufnimmt, und/oder dass die Auswertevorrichtung (16) lediglich Teilbereiche der ersten Ebene und/oder der zweiten Ebene auswertet.

9. Vorrichtung nach einem der vorhergehenden Ansprüche,
**dadurch gekennzeichnet,**
**dass** die Steuerungsvorrichtung (12) bei einer Vielzahl an Ebenen lediglich Bilder bestimmter Ebenen aufnimmt, und/oder dass die Auswertevorrichtung (16) bei einer Vielzahl an Ebenen lediglich Bilder bestimmter Ebenen auswertet.

10. Verfahren zur Erfassung einer dreidimensionalen Struktur mit einer Vorrichtung nach einem der vorhergehenden Ansprüche, bei dem
ein Bild einer ersten Ebene aufgenommen wird,
das bildgebende Gerät (10), insbesondere die Kamera, in z-Richtung verstellt wird,
ein Bild einer zweiten Ebene aufgenommen wird, und
eine Subebene zwischen der ersten Ebene und der zweiten Ebene interpoliert wird.

11. Verfahren nach einem der vorhergehenden Ansprüche,
**dadurch gekennzeichnet,**
**dass** das Aufnehmen der Bilder und die Auswertung parallel erfolgen.

## Geänderte Patentansprüche

### Geänderte Patentansprüche gemäss Regel 137(2) EPÜ.

1. Vorrichtung zur Erfassung einer dreidimensionalen Struktur, umfassend ein in z-Richtung verstellbares, bildgebendes Gerät (10), insbesondere Kamera,
eine Steuerungsvorrichtung (12), die dazu ausgebildet ist, an diskreten Abtastpunkten ein Bild einer ersten Ebene aufzunehmen und nach Verstellung des bildgebenden Geräts (10) in z-Richtung ein Bild einer zweiten Ebene in einem bestimmten, vorgegebenen Abstand aufzunehmen,
eine Auswertevorrichtung (16), die dazu ausgebildet ist, zur Geschwindigkeitserhöhung eine Subebene zwischen der ersten Ebene und der zweiten Ebene zu interpolieren, und
eine Belichtungsvorrichtung, die mittels der Steuerungsvorrichtung derart gesteuert ist, dass die Belichtungszeiten der ersten Ebene und der zweiten Ebene unterschiedlich sind.

2. Vorrichtung nach Anspruch 1,
**dadurch gekennzeichnet,**
**dass** die Interpolation der Subebene pixelweise erfolgt.

3. Vorrichtung nach Anspruch 1 oder 2,
**dadurch gekennzeichnet,**
**dass** die Interpolation mittels eines Parabelfits erfolgt.

4. Vorrichtung nach einem der vorhergehenden Ansprüche,
**dadurch gekennzeichnet,**
**dass** jede Ebene lediglich mit einer Belichtungszeit belichtet wird.

5. Vorrichtung nach einem der vorhergehenden Ansprüche,
**dadurch gekennzeichnet,**
**dass** ein Filter, insbesondere ein Median Filter und/oder bilateraler Filter, vorgesehen ist.

6. Vorrichtung nach Anspruch 5,
**dadurch gekennzeichnet,**
**dass** ein 16-bit Median Filter vorgesehen ist.

7. Vorrichtung nach einem der vorhergehenden Ansprüche,
**dadurch gekennzeichnet,**
**dass** die Belichtungszeiten mittels einer automatischen Parametrierung optimiert sind.

8. Vorrichtung nach einem der vorhergehenden Ansprüche,
**dadurch gekennzeichnet,**
**dass** die Steuerungsvorrichtung (12) lediglich Teilbereiche der ersten Ebene und/oder der zweiten Ebene aufnimmt, und/oder dass die Auswertevorrichtung (16) lediglich Teilbereiche der ersten Ebene und/oder der zweiten Ebene auswertet.

9. Vorrichtung nach einem der vorhergehenden Ansprüche,
**dadurch gekennzeichnet,**
**dass** die Steuerungsvorrichtung (12) bei einer Vielzahl an Ebenen lediglich Bilder bestimmter Ebenen aufnimmt, und/oder dass die Auswertevorrichtung (16) bei einer Vielzahl an Ebenen lediglich Bilder bestimmter Ebenen auswertet.

10. Verfahren zur Erfassung einer dreidimensionalen Struktur mit einer Vorrichtung nach einem der vorhergehenden Ansprüche, bei dem
an einem diskreten Abtastpunkt ein Bild einer ersten Ebene aufgenommen wird,
das bildgebende Gerät (10), insbesondere die Kamera, in z-Richtung verstellt wird,
an einem diskreten Abtastpunkt ein Bild einer zweiten Ebene in einem bestimmten, vorgegebenen Abstand aufgenommen wird,
zur Geschwindigkeitserhöhung eine Subebene zwischen der ersten Ebene und der zweiten Ebene interpoliert wird, und
eine Belichtungsvorrichtung derart mittels einer Steuerungsvorrichtung gesteuert wird, dass die Belichtungszeiten der ersten Ebene und der zweiten Ebene unterschiedlich sind.

11. Verfahren nach Anspruch 10,
**dadurch gekennzeichnet,**
**dass** das Aufnehmen der Bilder und die Auswertung parallel erfolgen.
